# EUROPEAN PATENT SPECIFICATION

(11) **EP 4 183 685 B1**
(45) Date of publication and mention of the grant of the patent: **07.08.2024**
(21) Application number: 21209874.3
(22) Date of filing: 23.11.2021
(51) Int. Cl.: B64D 11/06, B60N 2/06, B60N 2/12, B60N 2/14

(54) **SEAT SUPPORT SYSTEM FOR A CABIN OF A VEHICLE**
SITZHALTERUNGSSYSTEM FÜR EINE FAHRZEUGKABINE
SYSTÈME DE SUPPORT DE SIÈGE POUR UNE CABINE DE VÉHICULE

(43) Date of publication of application: 24.05.2023
(73) Proprietor: Airbus Operations GmbH, 21129 Hamburg (DE)
(72) Inventor: BENTHIEN, Hermann, 21129 Hamburg (DE); HEGENBART, Matthias, 21129 Hamburg (DE)
(74) Representative: LKGLOBAL Lorenz & Kopf Patentanwalt Attorney at Law PartG mbB

(56) References cited:
- US-A- 5 161 765
- US-A1- 2011 031 772
- US-A1- 2013 161 990

## Description

### Technical field

The invention relates to a seat support system for a cabin of a vehicle, a seat arrangement, a cabin having a seat support system and/or a seat arrangement, as well as a vehicle having such a cabin.

### Background of the invention

In commercial aircraft and other vehicles for transporting passengers, usually numerous passenger seats are installed. Depending on an intended comfort level, the passenger seats are arranged in at least one seating configuration or layout. For example, in an economy class layout, more passenger seats are installed per area than in business or first class layouts. However, a fixed seating layout is not always preferred. If an aircraft is operated on different flight routes and flight lengths, modifications of seating layouts may be beneficial. On short-haul flights, a higher number of economy class seats may be preferred, while more comfortable seating layouts with less seats and more individual space are preferred for long-haul flights. With fixed seating layouts, modifications are time-consuming and cumbersome.

Different solutions for providing more adaptive seat configurations are known. For example, EP 2 8035 80 B1 shows a holding device for fastening passenger seats in a means of passenger transport and a corresponding passenger seating system. The holding device comprises a seat leg fixing element, a sliding element, and a rail element. The seat leg fixing element is designed to receive a seat leg of a passenger seat. The sliding element is provided on the opposite side of the holding device to the seat leg fixing element and is designed to be inserted in a seat rail located on the floor of the means of passenger transport. The rail element is provided on the same side as the seat leg fixing element and is designed to receive and fix a sliding element of an additional holding device. The holding device is provided on a front seat leg and the additional holding device is provided on a rear seat leg of a folding passenger seat.

EP 2 958 803 B1 shows a passenger bench seat comprising a backrest, a seat element, a fastening rail which extends substantially parallel to a longitudinal axis of the seat element in the region of an edge of said seat element that faces towards the backrest, and a seatbelt system. In a first configuration of the passenger bench seat, the seatbelt system comprises a first number of seatbelts which are detachably fastened to the fastening rail in first positions which are adapted to said first configuration of the passenger bench seat. In a second configuration of the passenger bench seat, on the other hand, the seatbelt system comprises a second number of seatbelts which are detachably fastened to the fastening rail in second positions which are adapted to said second configuration of the passenger bench seat.

DE 10 2008 053 140 B3 shows a passenger seat for a passenger cabin of an aircraft, which comprises a seat surface, a backrest, at least one armrest, a seat belt, and an additional seat component referred to as an adjustment device. Via the adjustment device, a size of the seat surface of the passenger seat can be adaptively adjusted as required for persons of different body sizes.

DE 10 2010 046 853 A1 discloses a passenger seat system including a backrest and a seat, which has a first sub-portion having a first surface and a second, opposite surface to the first surface as well as a second sub-portion having a first surface and a second, opposite surface to the first surface. The sub-portions are relatively movable in order to provide first and second operating positions. In the first operating position the sub-portions are positioned in relation to the backrest one behind the other such that the first surface of the first sub-portion and the first surface of the second sub-portion form a usable total seat surface. In the second operating position the sub-portions are positioned in relation to the backrest one above the other such that one of the surfaces of the first sub-portion or the first surface of the second sub-portion forms a usable partial seat surface.

US 2013/161990 A1 discloses an aircraft passenger seat swivel apparatus for an aircraft seating unit comprising a pair of transversely spaced base rails, each having forward and aft fittings for connecting the base rails to an aircraft deck. The base rails define a transversely extending horizontal plane extending between the pair of base rails. A swivel assembly is disposed between the pair of base rails in the laterally extending horizontal plane. The swivel assembly provides a low profile seat with a spar that forms part of the swivel assembly and efficiently transfers loads from the seat to the aircraft deck. A sliding device allows the occupant to slide the seat forward, backward, and sideways independently of the rotation of the seat on the swivel assembly.

US 2011/031772 A1 discloses a vehicle seat arrangement structure having a plurality of vehicle seats; a seat sliding mechanism that supports at least one of the plurality of vehicle seats such that the vehicle seat supported by the seat sliding mechanism can slide with respect to a passenger compartment floor in a longitudinal direction of a vehicle; and a seat pivot mechanism that supports at least one of the plurality of vehicle seats such that the vehicle seat supported by the seat pivot mechanism can pivot with respect to the passenger compartment floor about a position that deviates from a longitudinal center and a transverse center of a seat cushion inward in a vehicle width direction and rearward in the vehicle length direction.

US 5 161 765 A discloses a seat mount that enables omnidirectional movement of the seat in a single plane by means of two pairs of sliding rods, one pair of which is perpendicular to the other, and a rotatable disk. The rods are locked and unlocked by a series of inclined, lock-like parts that can be moved by a cam mechanism. The rotatable disc is locked and released by a pin that protrudes through the disc into a hole below. The locking and unlocking mechanisms are controlled by a single cable.

### Summary of the invention

It is thus an object of the invention to propose an alternative device for supporting seats in a vehicle cabin, which device is capable of adjusting positions and/or orientations of seats, without impairing robustness and short turnaround times of the vehicle.

This object is met by a seat support system having the features of claim 1. Advantageous embodiments and further improvements may be gathered from the subclaims and the following description.

A seat support system for a cabin of a vehicle is proposed, the system comprising a cross member for attachment to seat rails, the cross member having a main extension axis that is transverse to the seat rails in an attached state of the cross member, at least one seat carrying device mounted on the cross member and comprising a mounting unit for receiving a passenger seat, wherein the at least one seat carrying device is adapted to move the mounting unit in a direction along the main extension axis of the cross member and to rotate the mounting unit about at least one rotational axis, which extends vertical to the mounting unit.

The cross member is a component that is attachable to seat rails, i.e. a pair of rails attached to or integrated into a cabin floor. The cross member is aligned to be perpendicular to the main extension direction of the seat rails. Thus, it will be aligned transverse to the extension direction of the rails in an installed state.

The cross member may be adapted to be attached in a fixed position on the rails. For this, common attachment fittings may be installed. However, also modified attachment fittings may be used that allow the sliding of the cross member along the seat rails to assume different positions. It is to be understood that the cross member constitutes an interface between the seat rails and the passenger seats to be installed on the seat support system. Thus, the cross member should be installed in such a way that all expected loads can be transferred between the seat rails and the passenger seats with a sufficient safety factor.

The cross member may comprise one of different possible designs. For example, it may be designed as a single, flat bar that comprises sufficient dimensions for providing its intended function. However, the cross member may also be divided into two or further parts, which are connected to each other to form a frame-like or framework-like structure. It may comprise an underside, to which the attachment fittings are mounted, as well as a top side for receiving the passenger seat(s).

The at least one seat carrying device will be mounted on the cross member to receive a passenger seat. For this, the seat carrying device comprises the mounting unit, to which the passenger seat is directly attached. The mounting unit may be a plate-like element that is carried and moved by the respective seat carrying device. The seat carrying device in turn is adapted to selectively move the mounting unit in a desired direction. This direction may at least include a translational motion component along a main extension axis of the cross member and a rotational motion about at least one rotational axis.

The intention is to move a seat attached to the respective mounting unit relative to the cross member in any desired way. The seat may thus be moved from a first position to at least one second position relative to the cross member. For example, a passenger seat may be moved in a substantially lateral direction to assume different distances to a lateral cabin lining. It may also be rotated to assume a different seating direction. By a movement in a lateral direction, an additional space next to the respective seat may be made available, which may be sufficient to include further seating devices, such as a child seat, an armrest, a lateral seating surface extension or a complete passenger seat. By a rotation, seating groups with first seats facing forward and second seats facing backward may be provided. Also, the rotatability allows to support a disabled person to sit down on the respective passenger seat by rotating the seat exemplarily by 90° to an adjacent aisle, where the respective user may get off from a wheelchair to sit down on the rotated seat. By rotating it back into an initial orientation, the passenger assumes a normal seating direction. In this regard, it may also be possible to translate that seat in a lateral direction to further support the disabled person.

The system according to the invention allows a flexible combination, such that a plurality of seat carrying devices may be combined to a row of seats.

The seat support system may comprise two seat carrying devices with two independently movable mounting units. The seat carrying devices may be placed next to each other, i.e. subsequently along a main extension direction of the cross member. In doing so, two seats are movable relative to each other through an independent control of the respective seat carrying devices. As mentioned above, a first seat, which may be located further inward, may be moved further away from a lateral wall of the cabin to increase a distance to a second seat, which is placed nearer to the lateral wall. A gap between both seat carrying devices may thereby be increased to such an extent that an additional passenger seat can be included therein. This additional passenger seat may be a child seat or a full passenger seat. As stated above, armrests or seat surface extensions may be also included instead.

The at least one seat carrying device may be rotatable about at least 180°. Thus, the seat carrying device is able to move the mounting unit over at least 180°, such that the respective seat may face forward or backward upon demand.

The at least one seat carrying device comprises a first rotation unit and a second rotation unit, wherein the first rotation unit is rotatable about a first rotational axis relative to the second rotation unit, wherein the second rotation unit is rotatable about a second rotational axis relative to the cross member, and wherein the first and second rotational axes are arranged at a distance to each other. It may additionally be possible, that the mounting unit is mounted eccentrically on the first rotation unit. Thus, the first rotation unit and the second rotation unit constitute a double eccentric device. The second rotation unit is simply rotatable about the second rotational axis, which preferably maintains a fixed position on the cross member. However, in another variant, the second rotational axis may also be translatable along the main extension direction of the cross member. The first rotation unit is rotatable about the first rotational axis, which is eccentrically arranged on the second rotation unit. This means that the first rotational axis is moved relative to the cross member upon rotation of the rotating second rotation unit. It is moved on a circular line, which has a radius that depends on the distance between the first rotational axis and the second rotational axis. Furthermore, if the mounting unit is arranged in an eccentrical manner on the first rotational axis it may be rotatable about a mounting unit rotational axis. Thus, the position and orientation of a passenger seat arranged on the respective seat carrying device depends on the rotational position of both the first rotation unit and the second rotation unit. Such a seat carrying device provides two degrees of freedom for the motion of a passenger seat. This setup provides a mechanically simple solution for moving a passenger seat relative to the cross member and two, or in a modification with an eccentrically arranged mounting unit, three motors are sufficient for moving the mounting unit to a desired position.

Furthermore, the seat carrying device may comprise a translation unit in addition to the first rotation unit and the second rotation unit. The translation unit may be designed for moving the second rotation unit in a direction parallel to the rails.

The first rotation unit may be coupled with a first motor, wherein the second rotation unit is coupled with a second motor, and wherein the first motor, and the second motor are adapted to be operated independently. If the mounting unit is arranged eccentrically on the first rotation unit, it may be coupled with an additional, third motor,

As a non-claimed alternative to the seat support system according to the invention, the at least one seat carrying device may comprise a seat rotation unit and at least one translation unit, wherein the seat rotation unit is attached to the translation unit and is rotatable about a seat rotation axis relative to the translation unit, wherein the translation unit may be adapted to linearly move the seat rotation unit along the main extension axis of the cross member. In this setup, a mainly translational motion is provided, to which a rotation of the mounting unit is superposed. It is conceivable that in addition to a translational motion along the main extension axis of the cross member, also a translational motion component perpendicular thereto may be provided. For this, an additional translation unit is required.

In this alternative, the seat rotation unit may be coupled with a fourth motor and the translation unit may be coupled with at least one fifth motor, wherein the fourth motor and the at least one fifth motor are adapted to be operated independently. This is provided in analogy to the previous embodiment with the double eccentric device. However, the control of the independent motors may in this case be less complex due to the mainly translational motion.

The seat support system may further comprise a control unit, wherein the control unit is coupled with the first motor and second motor, wherein the control unit is adapted to control the respective motors to move the mounting unit into a desired position relative to the cross member. Consequently, all motors can be controlled in a suitable way to move the mounting unit to a desired position and to let the mounting unit assume a desired orientation. Due to the combination of three rotational positions, the control of the double eccentric device may be more complex than in the mainly translational principle. In the light of the modification of the double eccentric device, also the third motor may be coupled with the control unit. In the alternative device with the fourth motor and the at least one fifth motor, the control unit may be adapted to control the respective motors in the above manner as well.

In addition, also a lifting mechanism may be included into the at least one seat carrying device, in order to selectively change the height of the respective passenger seat.

The invention further relates to a seat arrangement, comprising at least one seat support system according to the above, and a passenger seat for each seat carrying device of the at least one seat support system. The seat arrangement thus comprises an arrangement of passenger seats to be installed into a cabin of a vehicle. Any number of seat support systems having any possible number of seat carrying devices may be used. For example, a seat support system having two seat support devices for providing a group of two seats may be used. The respective passenger seats may be moved in a way, that a gap between the passenger seats is created as explained above. However, also other setups may be conceivable. For example, a group of three passenger seats may be provided, wherein the respective three seat carrying devices may move the respective passenger seats to provide one or two gaps between the respective passenger seats for a modified use. However, it is also conceivable that also at least one fixed passenger seat and only one seat carrying device are provided, in order to selectively move one of the passenger seats of a group of passenger seats to selectively provide a gap between the movable passenger seat and the adjacent passenger seat or seats.

In the seat arrangement, the at least one seat support system may comprise at least two seat carrying devices. Thus, a group of at least two passenger seats is provided, which is modifiable according to the above description. At least two passenger seats may be moved accordingly. It is conceivable that in larger groups of passenger seats, at least some of them may be rotated and/or shifted to provide a more comfortable arrangement.

The seat arrangement may further comprise at least one additional seat device, wherein the at least one seat carrying device is adapted to selectively increase a distance between at least one passenger seat and at least one adjacent passenger seat, such that the at least one additional seat device is placeable into the gap, wherein the additional seat device is selected from a group of additional seat devices, the group comprising a child seat, a seat surface extension, a backrest extension, an armrest, a table, a stowage compartment, and a passenger seat. The cross member may be adapted to receive and lock an additional seat device. When modifying the layout of a group of seats to include or remove an additional seat device, at least one seat carrying device may be operated to move a respective passenger seat in order to provide or close a gap, as explained above. An additional seat device may be brought into the cabin to be installed into the gap, e.g. by locking it into the cross member. It may be removed from gap if not required and the respective seat carrying device may be operated to move the passenger seats to close the respective gap.

The at least one seat device may be integrated into at least one of the passenger seats, such that it is selectively extendable from the respective passenger seat into the gap. For example, a seat surface extension may be integrated into or under a seat surface of a passenger seat, such that it may be extended into the gap if required. The same applies for a backrest surface extension. If the gap between two adjacent passenger seats is narrower than the width of a normal passenger seat, a seat surface extension and a backrest extension may be used as a child seat or a seat for a younger person.

The invention further relates to a cabin of a vehicle, comprising at least one seat support system according to the above and/or at least one seat arrangement according to the above.

The invention further relates to a vehicle having at least one cabin according to the above.

The vehicle may be a commercial aircraft. It may be feasible to design the seat support system in such a way that during take-off and landing, automatically an initial position of the associated passenger seats is assumed.

### Brief description of the figures

In the following, the attached drawings are used to illustrate exemplary embodiments in more detail. The illustrations are schematic and not to scale. Identical reference numerals refer to identical or similar elements. They show:
- Fig. 1: a seat support system,
- Fig. 2: a motion sequence of the seat support system,
- Fig. 3: another seat support system, not covered by the present claims,
- Fig. 4: a motion sequence of the seat support system of fig. 3,
- Fig. 5 and 6: further motion sequences,
- Fig. 7: the seat carrying device of fig. 3 in a more detailed illustration,
- Fig. 8: a motion sequence for supporting a disabled passenger,
- Fig. 9: an aircraft.

### Detailed description of exemplary embodiments

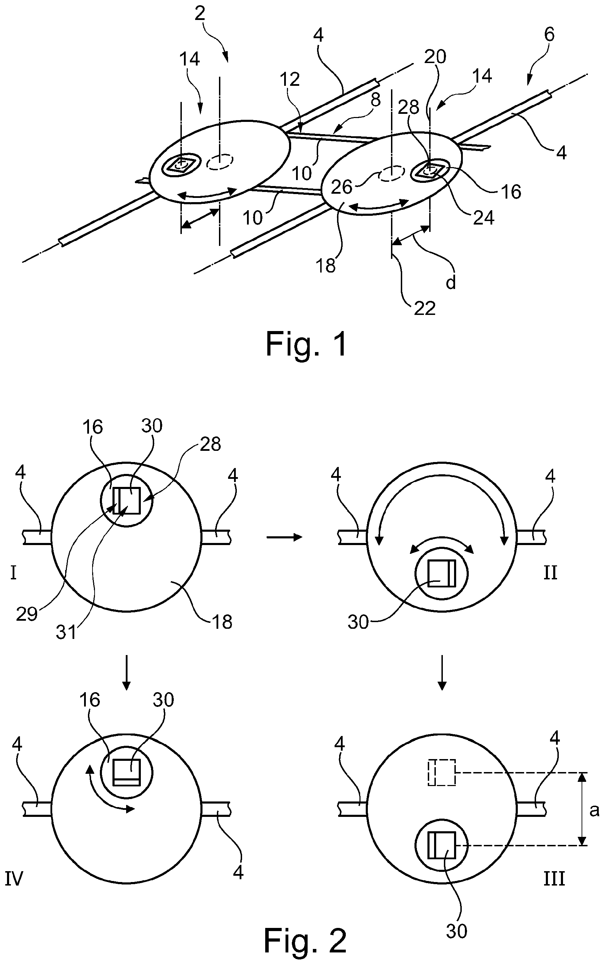

Fig. 1 shows a seat support system 2 for a cabin of a vehicle. Here, the system 2 is attached to two longitudinal rails 4, which may be seat rails attached to or integrated into a cabin floor 6. The seat support system 2 comprises a cross member 8, which exemplarily comprises two parallel, elongated sections 10, which are arranged at a distance and parallel to each other. There may be further stiffening sections, which connect both elongated sections 10 to form a framework-like structure. The cross member 8 is attached to the rails 4, e.g. by several fittings, which are not shown herein. These may be commonly used passenger seat fittings.

On a top side 12 of the cross member 8, two seat carrying devices 14 are placed. In this example, the seat carrying devices 14 comprise a first rotation unit 16 and a second rotation unit 18. The first rotation unit 16 is rotatably supported on the second rotation unit 18 about a first rotational axis 20. The second rotation unit 18 is rotatably supported about a second rotational axis 22. The first rotational axis 20 and the second rotational axis 22 are arranged at a distance d to each other. Thus, upon rotation of the second rotation unit 18, e.g. through a second motor 26, the first rotation unit 16 is moved on a circular line around the second rotational axis 22. By driving a first motor 24, the first rotation unit 16 rotates about the first rotational axis 20. A mounting unit 28, which is arranged on the first rotation unit, is adapted to carry a passenger seat. Thus, by operating the seat carrying device 14, the mounting unit 28 and the passenger seat, respectively, can be moved relative to the cross member 8 and the rails 4.

Fig. 2 shows two exemplary motion sequences of a passenger seat 30 in four drawing sections. The passenger seat 30 exemplarily comprises a backrest 29 and a seating surface 31. Its size is not to scale and simply for explaining the principle of the system according to the invention.

The first motion sequence is shown in drawing sections I to III. Here, the passenger seat 30 is mounted on the mounting unit 28 on the first rotation unit 16.

In the drawing section I, the passenger seat 30 has a first position and a first orientation. The seating direction points to the right hand side of the drawing plane. This is an initial position. In drawing section II, the second rotation unit 18 is rotated about 180° and thus the first rotation unit 16 is rotated about 180° as well. Due to the eccentric arrangement of the first rotation unit 16, the lateral position of the first rotation unit 16 is shifted relative to the rail 4. Due to the rotation, the passenger seat 30 now has a seating direction that points to the left hand side of the drawing plane. By an additional rotation of the first rotation unit 16 about 180° shown in drawing section III, the passenger seat 30 faces to the right hand side of the drawing plane again, but remains shifted about a distance a from its initial position.

A second motion sequence is shown with drawing sections I and IV. In the drawing section IV, the first rotation unit 16 is rotated about 90° from the initial position in drawing section I, such that the seating direction of the passenger seat 30 points to the top of the drawing plane.

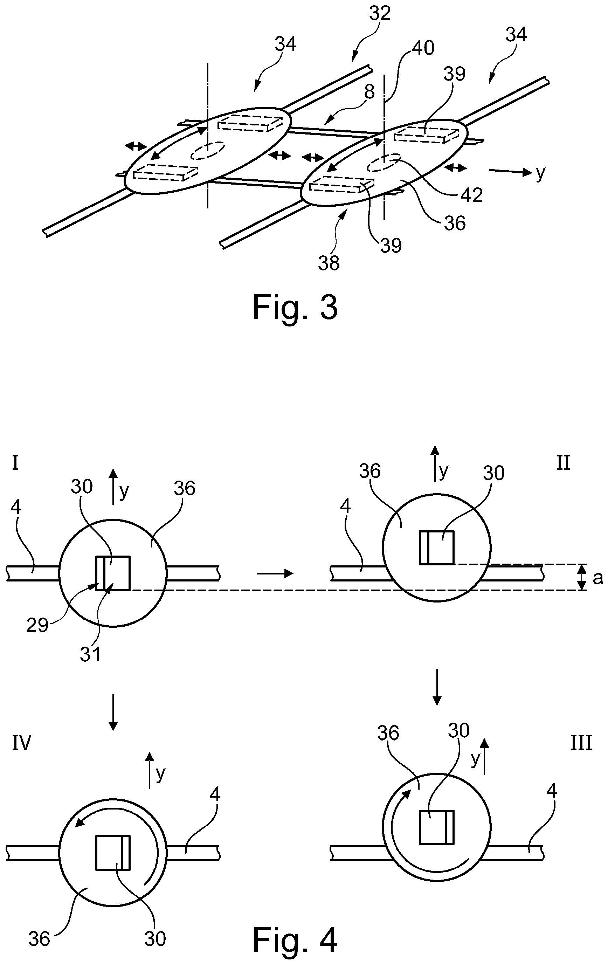

Fig. 3 shows a modified system 32, which is not covered by the claims, which exemplarily comprises two seat carrying devices 34. These comprise a seat rotation unit 36, which is rotatably supported on a translation device 38. In turn, the translation device 38 is capable of translating the seat carrying device 34 along a main extension axis y through a fifth motor 39, which may exemplarily be a lateral axis in the respective cabin. Here, the seat rotation unit 36 is also the mounting unit for a passenger seat. By translating the translation unit 38 along the cross member 8, a seat rotation axis 40 is moved. By operating a fourth motor 42, the seat rotation unit 36 is rotated about the seat rotation axis 40.

Two motion sequences are shown in four drawing sections I to IV in fig. 4. The first motion sequence is shown in drawing sections I to III. In drawing section I, the passenger seat 30 is in its initial position and the seating direction points to the right hand side. By operating the translation unit 38, the passenger seat 30 is shifted about a distance a along the main extension axis y and transverse to the extension of the rails 4. According to drawing section III, the seat rotation unit 36 is rotated to change the orientation of the passenger seat 30.

In the second motion sequence, which is shown with drawing sections I and IV, the orientation of the passenger seat 30 is changed by rotating the seat rotation unit 36 about the seat rotation axis 40.

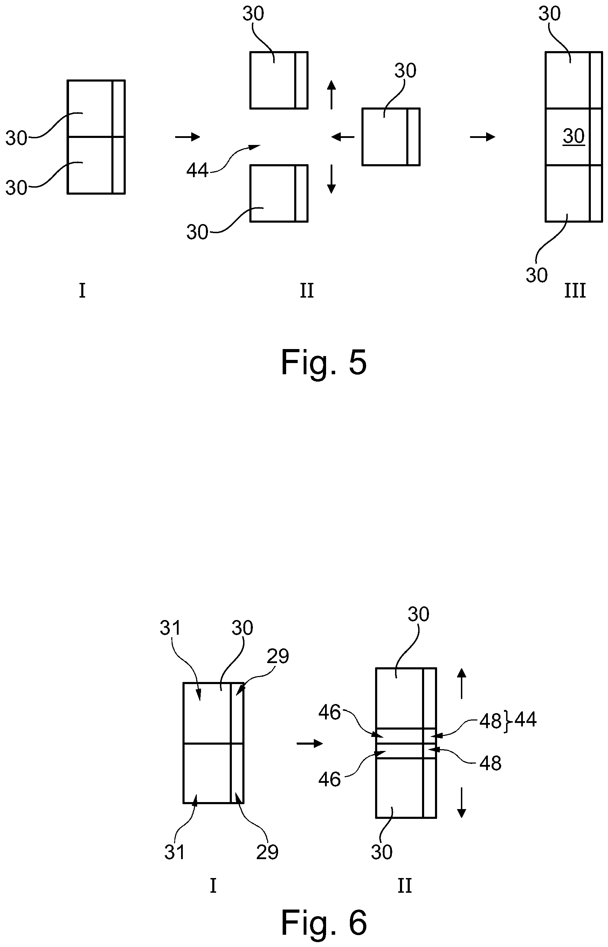

Fig. 5 shows another illustration of an exemplary motion sequence and a potential application with three drawing sections I to III. In drawing section I, two adjacent passenger seats 30 are shown. They are arranged flush next to each other. In drawing section II, both passenger seats 30 are shifted away from each other, in order to create a gap 44 that is shown in drawing section II. This may be conducted either through the use of two systems 2 of Fig. 1 or two systems 32 of Fig. 3 or a combination thereof. In this example, the gap 44 is sufficiently large to allow an introduction of a further passenger seat 30 into the gap 44. As shown in drawing section III, a group of three adjacent passenger seats 30 is created.

Fig. 6 shows a further motion sequence in two consecutive drawing section I and II. Here, the gap 44 between two adjacent passenger seats 30 is created by shifting both passenger seats 30 away from each other. It may also be possible to only move one of the passenger seats 30 to provide the gap 44. Exemplarily, a seat surface extension 46 as an additional seat device is extended from both passenger seats 30, i.e. the seat surfaces 31, as well as two backrest extensions 48 as additional seat devices from the backrests 29.

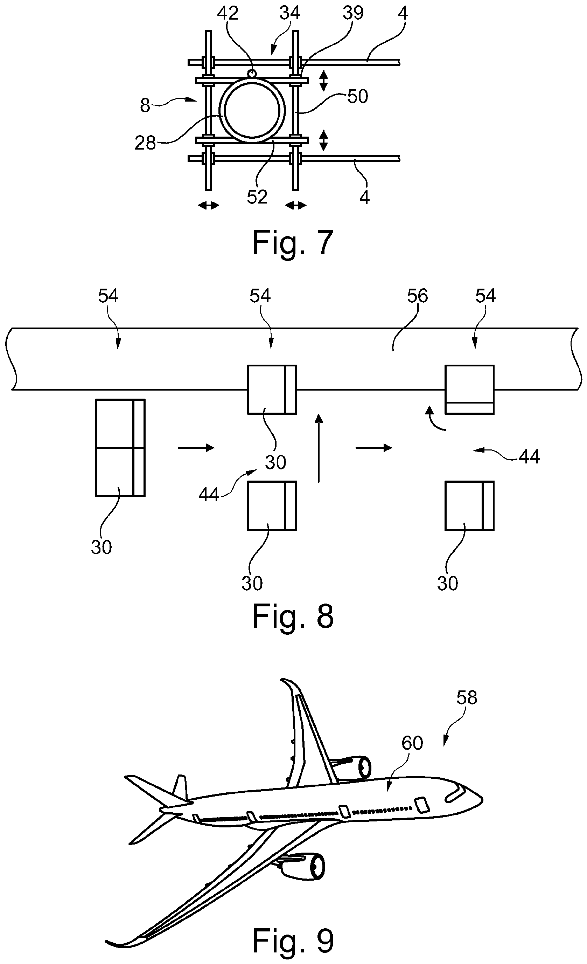

Fig. 7 shows the seat carrying device 34 of fig. 3 attached to a pair of rails 4. Here, a pair of cross rails 50 form the cross member 8. An additional pair of auxiliary rails 52 is provided that extend transverse to the cross rails 50 and parallel to the rails 4. The cross rails 50 may be placed at a desired location on the rails 4. The mounting unit 28 is rotatably supported on the auxiliary rails 52. A lateral position, i.e. in a transverse direction to the rails 4, is variable by shifting the mounting unit 28 along the cross rails 50. The mounting unit 28 is rotatable by the fourth motor 42, which engages a gear wheel having an outer toothing of the mounting unit 28.

Fig. 8 shows a motion sequence for moving one of two passenger seats 30 of a group 54 of seats. Here, the group 54 is directly adjacent an aisle 56 in a cabin. The passenger seat 30 nearest to the aisle is translated towards the aisle 56, as seen in the illustration of drawing sections I and II. Afterwards, the passenger seat 30 is rotated about 90°. Thus, a disabled person that approaches the group 54 may easily change from a wheelchair onto the moved passenger seat 30, which is then moved in a reverse direction to assume the position and orientation shown in drawing section I again.

Fig. 9 shows an aircraft 58, which comprises a cabin 60, in which a system 2 and/or 32 may be arranged.

## Claims

1. Seat support system (2, 32) for a cabin of a vehicle, comprising:
a cross member (8) for attachment to seat rails (4), the cross member (8) having a main extension axis (y) that is transverse to the seat rails (4) in an attached state of the cross member (8),
at least one seat carrying device (14, 34) mounted on the cross member (8) and comprising a mounting unit (28) for receiving a passenger seat (30),
wherein the at least one seat carrying device (14, 34) is adapted to move the mounting unit (28) in a direction along the main extension axis (y) of the cross member (8) and to rotate the mounting unit (28) about at least one rotational axis (20, 22, 40), which extends vertical to the mounting unit (28),
**characterized in that** the at least one seat carrying device (14, 34) comprises a first rotation unit (16) and a second rotation unit (18),
wherein the first rotation unit (16) is rotatable about a first rotational axis (20) relative to the second rotation unit (18),
wherein the second rotation unit (18) is rotatable about a second rotational axis (22) relative to the cross member (8), and
wherein the first and second rotational axes (20, 22) are arranged at a distance (d) to each other.

2. Seat support system (2, 32) according to claim 1,
comprising two seat carrying devices (14, 34) with two independently movable mounting units (28).

3. Seat support system (2, 32) according to claim 1 or 2,
wherein the at least one seat carrying device (14, 34) is rotatable about at least 180°.

4. Seat support system (2, 32) according to any of the preceding claims,
wherein the first rotation unit (16) is coupled with a first motor (24),
wherein the second rotation unit (18) is coupled with a second motor (26), and
wherein the first motor (24) and the second motor (26) are adapted to be operated independently.

5. Seat support system (2, 32) according to claim 4,
further comprising a control unit,
wherein the control unit is coupled with the first motor (24) and second motor (26),
wherein the control unit is adapted to control the respective motors (24, 26) to move the mounting unit (28) into a desired position relative to the cross member (8).

6. Seat arrangement, comprising:
at least one seat support system (2, 32) according to any of the preceding claims, and
a passenger seat (30) for each seat carrying device (14, 34) of the at least one seat support system (2, 32).

7. Seat arrangement according to claim 6,
wherein the at least one seat support system (2, 32) comprises at least two seat carrying devices (14, 34).

8. Seat arrangement according to claim 6 or 7,
further comprising at least one additional seat device (46, 48),
wherein the at least one seat carrying device (14, 34) is adapted to selectively increase a distance between at least one passenger seat (30) and at least one adjacent passenger seat (30) to form a gap (44), such that the at least one additional seat device (46, 48) is placeable into the gap (44),
wherein the additional seat device (46, 48) is selected from a group of additional seat devices (46, 48), the group comprising:
- a child seat,
- a seat surface extension (46),
- a backrest extension (48),
- an armrest,
- a table,
- a stowage compartment, and
- a passenger seat.

9. Seat arrangement according to claim 8,
wherein the at least additional one seat device (46, 48) is integrated into at least one of the passenger seats (30), such that it is selectively extendable from the respective passenger (30) seat into the gap (44).

10. Cabin (60) of a vehicle (58), comprising at least one seat support system (2, 32) of any of the claims 1 to 5 and/or at least one seat arrangement of any of the claims 6 to 10.

11. Vehicle (58) having at least one cabin (60) according to claim 10.

12. Vehicle (58) according to claim 11, wherein the vehicle (58) is a commercial aircraft (58).

## Patentansprüche

1. Sitzhalterungssystem (2, 32) für eine Fahrzeugkabine, umfassend:
eine Querstrebe (8) zur Befestigung an Sitzschienen (4), wobei die Querstrebe (8) eine Haupterstreckungsachse (y) aufweist, die in einem befestigten Zustand der Querstrebe (8) quer zu den Sitzschienen (4) verläuft,
mindestens eine Sitztragevorrichtung (14, 34), die an der Querstrebe (8) angebracht ist und eine Befestigungseinheit (28) zur Aufnahme eines Passagiersitzes (30) umfasst,
wobei die mindestens eine Sitztragevorrichtung (14, 34) dazu angepasst ist, die Befestigungseinheit (28) in einer Richtung entlang der Haupterstreckungsachse (y) der Querstrebe (8) zu bewegen und die Befestigungseinheit (28) um mindestens eine Drehachse (20, 22, 40) zu drehen, die sich vertikal zur Befestigungseinheit (28) erstreckt, **dadurch gekennzeichnet, dass** die mindestens eine Sitztragevorrichtung (14, 34) eine erste Dreheinheit (16) und eine zweite Dreheinheit (18) umfasst,
wobei die erste Dreheinheit (16) um eine erste Drehachse (20) relativ zur zweiten Dreheinheit (18) drehbar ist,
wobei die zweite Dreheinheit (18) um eine zweite Drehachse (22) relativ zur Querstrebe (8) drehbar ist,
wobei die erste und die zweite Drehachse (20, 22) in einem Abstand (d) zueinander angeordnet sind.

2. Sitzhalterungssystem (2, 32) nach Anspruch 1,
umfassend zwei Sitztragevorrichtungen (14, 34) mit zwei unabhängig voneinander bewegbaren Befestigungseinheiten (28) .

3. Sitzhalterungssystem (2, 32) nach Anspruch 1 oder 2,
wobei die mindestens eine Sitztragevorrichtung (14, 34) um mindestens 180° drehbar ist.

4. Sitzhalterungssystem (2, 32) nach einem der vorhergehenden Ansprüche,
wobei die erste Dreheinheit (16) mit einem ersten Motor (24) gekoppelt ist,
wobei die zweite Dreheinheit (18) mit einem zweiten Motor (26) gekoppelt ist, und
wobei der erste Motor (24) und der zweite Motor (26) dazu angepasst sind, unabhängig voneinander betrieben zu werden.

5. Sitzhalterungssystem (2, 32) nach Anspruch 4,
ferner umfassend eine Steuereinheit,
wobei die Steuereinheit mit dem ersten Motor (24) und dem zweiten Motor (26) gekoppelt ist,
wobei die Steuereinheit dazu angepasst ist, die jeweiligen Motoren (24, 26) zu steuern, um die Befestigungseinheit (28) in eine gewünschte Position relativ zur Querstrebe (8) zu bewegen.

6. Sitzanordnung, umfassend:
mindestens ein Sitzhalterungssystem (2, 32), nach einem der vorhergehenden Ansprüche, und
einen Passagiersitz (30) für jede Sitztragevorrichtung (14, 34) des mindestens einen Sitzhalterungssystems (2, 32) .

7. Sitzanordnung nach Anspruch 6,
wobei das mindestens eine Sitzhalterungssystem (2, 32) mindestens zwei Sitztragevorrichtungen (14, 34) umfasst.

8. Sitzanordnung nach Anspruch 6 oder 7,
ferner umfassend mindestens eine zusätzliche Sitzvorrichtung (46, 48),
wobei die mindestens eine Sitztragevorrichtung (14, 34) dazu angepasst ist, einen Abstand zwischen mindestens einem Passagiersitz (30) und mindestens einem benachbarten Passagiersitz (30) selektiv zu vergrößern, um einen Zwischenraum (44) zu bilden, so dass die mindestens eine zusätzliche Sitzvorrichtung (46, 48) in den Zwischenraum (44) platzierbar ist,
wobei die zusätzliche Sitzvorrichtung (46, 48) aus einer Gruppe zusätzlicher Sitzvorrichtungen (46, 48) ausgewählt ist, wobei die Gruppe umfasst:
- einen Kindersitz,
- eine Sitzflächenverlängerung (46),
- eine Rückenlehnenverlängerung (48),
- eine Armlehne,
- einen Tisch,
- ein Staufach, und
- einen Passagiersitz.

9. Sitzanordnung nach Anspruch 8,
wobei die mindestens eine zusätzliche Sitzvorrichtung (46, 48) so in mindestens einen der Passagiersitze (30) integriert ist, dass sie selektiv aus dem jeweiligen Passagiersitz (30) in den Zwischenraum (44) ausfahrbar ist.

10. Kabine (60) eines Fahrzeugs (58), umfassend mindestens ein Sitzhalterungssystem (2, 32) nach einem der Ansprüche 1 bis 5 und/oder mindestens eine Sitzanordnung nach einem der Ansprüche 6 bis 10.

11. Fahrzeug (58) mit mindestens einer Kabine (60) nach Anspruch 10.

12. Fahrzeug (58) nach Anspruch 11, wobei das Fahrzeug (58) ein Verkehrsflugzeug (58) ist.

## Revendications

1. Système de support de siège (2, 32) pour une cabine d'un véhicule, comprenant :
une traverse (8) destinée à être fixée à des rails de siège (4), la traverse (8) ayant un axe d'extension principal (y) qui est transversal aux rails de siège (4) dans un état fixé de la traverse (8),
au moins un dispositif porteur de siège (14, 34) monté sur la traverse (8) et comprenant une unité de montage (28) destinée à recevoir un siège passager (30),
l'au moins un dispositif porteur de siège (14, 34) étant conçu pour déplacer l'unité de montage (28) dans une direction le long de l'axe d'extension principal (y) de la traverse (8) et pour faire tourner l'unité de montage (28) autour d'au moins un axe de rotation (20, 22, 40) qui s'étend à la verticale de l'unité de montage (28),
**caractérisé en ce que** l'au moins un dispositif porteur de siège (14, 34) comprend une première unité de rotation (16) et une seconde unité de rotation (18),
la première unité de rotation (16) pouvant tourner autour d'un premier axe de rotation (20) par rapport à la seconde unité de rotation (18),
la seconde unité de rotation (18) pouvant tourner autour d'un second axe de rotation (22) par rapport à la traverse (8), et
les premier et second axes de rotation (20, 22) étant disposés à une distance (d) l'un de l'autre.

2. Système de support de siège (2, 32) selon la revendication 1,
comprenant deux dispositifs porteurs de siège (14, 34) pourvus de deux unités de montage (28) pouvant être déplacées indépendamment l'une de l'autre.

3. Système de support de siège (2, 32) selon la revendication 1 ou 2,
l'au moins un dispositif porteur de siège (14, 34) pouvant pivoter sur au moins 180°.

4. Système de support de siège (2, 32) selon l'une quelconque des revendications précédentes,
la première unité de rotation (16) étant accouplée à un premier moteur (24),
la seconde unité de rotation (18) étant accouplée à un second moteur (26), et
le premier moteur (24) et le second moteur (26) étant conçus pour fonctionner indépendamment.

5. Système de support de siège (2, 32) selon la revendication 4,
comprenant en outre une unité de commande,
l'unité de commande étant accouplée au premier moteur (24) et au second moteur (26),
l'unité de commande étant conçue pour commander les moteurs (24, 26) respectifs afin de déplacer l'unité de montage (28) dans une position souhaitée par rapport à la traverse (8).

6. Agencement de siège, comprenant :
au moins un système de support de siège (2, 32) selon l'une quelconque des revendications précédentes, et
un siège passager (30) pour chaque dispositif porteur de siège (14, 34) de l'au moins un système de support de siège (2, 32).

7. Agencement de siège selon la revendication 6,
l'au moins un système de support de siège (2, 32) comprenant au moins deux dispositifs porteurs de siège (14, 34) .

8. Agencement de siège selon la revendication 6 ou 7, comprenant en outre au moins un dispositif de siège supplémentaire (46, 48),
l'au moins un dispositif porteur de siège (14, 34) étant conçu pour augmenter sélectivement la distance entre au moins un siège passager (30) et au moins un siège passager (30) adjacent pour former un espace (44), de sorte que l'au moins un dispositif de siège supplémentaire (46, 48) puisse être placé dans l'espace (44),
le dispositif de siège supplémentaire (46, 48) étant choisi dans un groupe de dispositifs de siège supplémentaires (46, 48), le groupe comprenant :
- un siège pour enfant,
- une extension de surface de siège (46),
- une extension de dossier (48),
- un accoudoir,
- une table,
- un compartiment de rangement, et
- un siège passager.

9. Agencement de siège selon la revendication 8,
l'au moins un dispositif de siège supplémentaire (46, 48) étant intégré à au moins un des sièges passager (30), de sorte qu'il puisse être étendu sélectivement depuis le siège passager (30) respectif dans l'espace (44).

10. Cabine (60) d'un véhicule (58), comprenant au moins un système de support de siège (2, 32) selon l'une quelconque des revendications 1 à 5 et/ou au moins un agencement de siège selon l'une quelconque des revendications 6 à 10.

11. Véhicule (58) comportant au moins une cabine (60) selon la revendication 10.

12. Véhicule (58) selon la revendication 11, le véhicule (58) étant un aéronef commercial (58).
